# EUROPÄISCHE PATENTSCHRIFT

(11) **EP 4 511 579 B1**
(45) Veröffentlichungstag und Bekanntmachung des Hinweises auf die Patenterteilung: **04.11.2026**
(21) Anmeldenummer: 23721860.7
(22) Anmeldetag: 21.04.2023
(51) Int. Cl.: F16C 29/00, F16C 29/02

(54) **TELESKOPFÜHRUNG**
TELESCOPIC GUIDE
GUIDE TÉLESCOPIQUE

(30) Priorität: 22.04.2022 DE 202022102165 U
(43) Veröffentlichungstag der Anmeldung: 26.02.2025
(73) Patentinhaber: igus SE & Co. KG, 51147 Köln (DE)
(72) Erfinder: TÜRKER, Muhammet Erkam, 52388 Nörvenich (DE)
(74) Vertreter: Lippert Stachow Patentanwälte Rechtsanwälte
(86) Internationale Anmeldenummer: PCT/EP2023/060505
(87) Internationale Veröffentlichungsnummer: WO 2023/203226

(56) Entgegenhaltungen:
- CN-A- 107 100 928
- DE-A1- 3 743 086
- DE-U1- 202018 104 466
- GB-A- 1 300 168
- US-A- 2 757 051
- US-A1- 2006 083 447

## Beschreibung

Die Erfindung betrifft eine Teleskopführung umfassend ein erstes langgestrecktes Teleskopelement als Basiselement sowie umfassend ein zweites langgestrecktes Teleskopelement als Abschlusselement, wobei diese beiden Teleskopelemente parallel zueinander angeordnet und in Längsrichtung relativ zueinander bewegbar sind, wobei eine Gleitlagerung mittelbar oder unmittelbar zwischen dem ersten Teleskopelement und dem zweiten Teleskopelement vorgesehen ist, mit der Maßgabe, dass die Gleitlagerung eine Gleitlagereinheit mit wenigstens einem Gleitlagerelement aufweist, welches ortsfest an demjenigen als Basiselement vorgesehenen Teleskopelement fixierbar ist und mit demjenigen als Abschlusselement vorgesehenen Teleskopelement gleitend in Kontakt steht, und eine zweite Gleitlagereinheit wenigstens ein Gleitlagerelement aufweist, welches ortsfest an dem zweiten Teleskopelement fixierbar ist, während es mit dem ersten Teleskopelement gleitend in Kontakt steht, wobei die Teleskopelemente jeweils als Doppelschiene und einstückig ausgebildet sind, wobei die Gleitlagerelemente als hülsenförmige Gleitlagerkörper ausgestaltet sind, die einen C-förmigen Querschnitt aufweisen, und dass mittels des C-förmigen Querschnitt eine seitliche Öffnung am Gleitlagerkörper ausgebildet ist.

Das Dokument US 2006 / 083447 A1 offenbart eine symmetrische Teleskopführung, bei der beide Führungselemente am Schlitten befestigt sind.

Die Merkmale des Oberbegriffs sind aus der DE 37 43 086 A1 bekannt. Diese Veröffentlichung schlägt eine Gleitlagerhülse vor, die aus einem dauerelastischen Material hergestellt sein soll, z. B. einem Kunststoff, der mit einem Schmiermittel gefüllt ist. Die Gleitlagerhülse ist mit Wellungen versehen, wobei die Wellungen in Erstreckungsrichtung eines Spaltes, zwischen Führungsteilen gesehen, sich abwechselnd an den beiden Führungsteilen abstützen. Hierdurch sollen Toleranzen in den Abmessungen der Führungsteile ausgeglichen und erreicht werden, daß ein damit versehene als Gleitlager bezeichnete Teleskopführung spielarm oder spielfrei ist.

Eine weitere Teleskopführung ist aus dem Gebrauchsmuster DE 20 2018 104 466 U1 bekannt. Diese Teleskopführung weist Teleskopelemente mit je zwei parallel verlaufenden Schienen auf. Zur Gleitlagerung zweier Teleskopelemente sind vier Gleitlagerelemente vorgesehen, davon zwei an dem ersten Teleskopelement fixiert und gleitend in Kontakt mit dem zweiten Teleskopelement und zwei Gleitlagerelemente sind an dem zweiten Teleskopelement fixiert und gleitend in Kontakt mit dem ersten Teleskopelement.

Die bekannte Konstruktion sieht mehrere sog. Gleitführungsflächen vor, um die teleskopierbare Bewegbarkeit der Teleskopelemente relativ zueinander bereitzustellen. Charakteristisch für diesen Stand der Technik ist die Gestaltung der Gleitlagerelemente, die alle baugleich sein sollen. D. h. es wird nur ein einziger Typ Gleitlagerelement universell verwendet. Das universelle Gleitlagerelement wird als links sowie rechts an der Doppelschiene verwendet und muss überdies wahlweise mit dem ersten oder mit dem zweiten Teleskopelement fixierbar sein. Geeignete Fixiermittel müssen zu dem Zweck doppelt bereitgestellt werden, was in Form zweier Ausnehmungen realisiert ist, welche mit einem separaten Klemmelement zusammenwirken müssen. Das applizierte Klemmelement bildet im fixierten Zustand an dem Teleskopelement eine erhabene Gestalt, welche formschlüssig in eine der Ausnehmungen des Gleitlagerelements passt. Das Klemmelement kann z. B. ein Gewindestift sein, der an dem Teleskopelement anschraubbar ist.

Aus der GB 1 300 168 A ist eine als Vorrichtung zum Führen eines Aggregats bezeichnete Teleskopführung bekannt. Das Aggregat soll in einer Ebene oder einer gekrümmten Fläche verlagerbar sein. Dafür sind relativ zueinander bewegliche, einander ergänzende Elemente vorgesehen, von denen die einen tragende Funktion haben und mit einem Support verbunden sind und die anderen von dem Aggregat getragen und mit diesem verbunden sind. Dabei ist vorgesehen, dass die tragenden Elemente und die getragenen Elemente aus Metallprofilen konstanten Querschnitts bestehen und jedes Element an seinem parallel zur Verlagerungsachse angeordneten Abschnitt Winkel bildende Ausstanzungen aufweist, die an einem Quersteg des jeweils anderen bzw. ergänzenden Elements anliegen und einen Rollweg bilden, sowie derart angeordnet sind, daß die Elemente stets, in welcher relativen Lage zueinander sie sich auch jeweils befinden, in Anlage aneinander sind, wobei das tragende Element eine weiche, einen Reibweg bildende Gleitführung aufweist.

Die US 2,757,051 A schlägt eine Teleskopführung in Form zusammenpassender Schubladenaufhängungsteile vor, wobei ein Lagerelement für röhrenförmige Wulstabschnitte zusammenpassender Schubladenaufhängungsteile vorgesehen ist. Die Wulstabschnitte bestehen aus einer röhrenförmigen Wulst, die von einem Flansch getragen wird, wobei die Wulst eine von ihrer Außenseite zugängliche Halteöffnung aufweist, einer länglichen röhrenförmigen Hülse aus hartem, geformtem, gleitfähigem Material, die an einer Seite gespalten ist, um beabstandete Randabschnitte bereitzustellen, die seitlich nachgeben, wenn die Hülse über die Wulst gestülpt wird, und die Wulst fest greifen, wenn sie an ihrem Platz ist, und einer Nase, die integral mit der Innenfläche der Hülse ist und von dieser verdeckt wird, wobei die Nase radial zur Achse der Hülse angeordnet ist und eine geringere Querbreite aufweist als der Abstand zwischen den beabstandeten Randabschnitten.

Die bekannten Teleskopführungen werden als räumlich zu auslandend erachtet und konstruktiv zu aufwändig. Das universelle Gleitelement wird für zu komplex gehalten. Darüber hinaus ist die Applikation der Klemmelemente an den Teleskopelementen arbeitsaufwändig. Insbesondere wenn als Klemmelement ein Gewindestift ist, der parallel zur Längserstreckung am Teleskopelement eingeschraubt werden muss. Der Arbeitsaufwand ist hoch, um die benötigte Anzahl Gewindestifte an die erforderliche Position am jeweiligen Teleskopelement zu schrauben.

Der Erfindung liegt die Aufgabe zugrunde, die bekannte Teleskopführung konstruktiv zu vereinfachen und die Stabilität und Qualität der Bewegungsführung zu verbessern.

Erfindungsgemäß wird die Aufgabe dadurch gelöst, dass eine weitere Gleitlagereinheit wenigstens ein Gleitlagerelement aufweist, welches ortsfest an dem als Abschlusselement vorgesehenen Teleskopelement fixierbar ist, während es mit dem als Basiselement vorgesehenen Teleskopelement gleitend in Kontakt steht, dass jeweils die Doppelschiene zwei parallele Tragschienen und/oder zwei parallele Gleitschienen aufweist, und dass die Teleskopelemente symmetrisch ausgebildet sind, wobei die Symmetrieebene in der Längsrichtung der Teleskopführung sowie orthogonal zur jener Ebene liegt, in der sich die parallelen Tragschienen beziehungsweise Gleitschienen der Doppelschiene erstrecken.

Die neuen hülsenförmigen Gleitlagerkörper mit C-förmigem Querschnitt beseitigen die Komplexität des bekannten C-förmigen Gleitlagerkörpers. Mit dem deutlich geringeren Platzbedarf für die Gleitlagerkörper geht einher, dass auch die Gestaltung der Teleskopelemente vereinfacht ist, sie kompakter gebaut sind und insgesamt weniger Material benötigt wird. Die vorgeschlagene Teleskopführung ist einfacher zu montieren und einfacher handhabbar.

Der symmetrische Aufbau der Teleskopelemente verbessert die Qualität der Bewegungsführung; die Doppelschiene stellt beidseits gleiche Mittel bereit, um eine gleichmäßige Parallelführung zu realisieren.

Der C-förmige Querschnitt der hülsenförmigen Gleitlagerkörper bewirkt stets eine formschlüssige Verbindung gemeinsam mit und relativ zu den beiden beteiligten Teleskopelementen.

Die damit bereitgestellte Gleitlagerung nimmt in der Querschnittsebene der Gleitlagerkörper Kräfte aus allen Richtungen auf.

Zweckmäßig weist jeder hülsenförmige Gleitlagerkörper eine Innenkontur und eine Außenkontur auf, wobei sich die Innenkontur und die Außenkontur in einer axialen Richtung des Gleitlagerkörper erstrecken, und wobei die Innenkontur und die Außenkontur konzentrisch zueinander angeordnet sind. Diese Gestaltung begünstigt die Kompaktheit der Gleitlagerkörper.

Vorteilhaft weist die Innenkontur des Gleitlagerkörpers einen polygonförmigen Querschnitt auf und vorzugsweise ist der Querschnitt quadratisch. Die polygonförmige Gestaltung begünstigt es, eine Trag- und Führungsfunktion zu erfüllen im Zusammenwirken mit den beteiligten Teleskopelementen.

Ebenfalls nützlich ist es, wenn die Außenkontur des Gleitlagerkörpers einen polygonförmigen oder kreisförmigen Querschnitt aufweist. Die polygonförmige Gestaltung der Außenkontur kann gut eine Trag- und Führungsfunktion im Zusammenwirken mit den beteiligten Teleskopelementen begünstigen, während ein kreisförmiger Querschnitt günstig ist, sofern kein Drehmoment aufgenommen werden muss.

Die Erfindung sieht insbesondere zwei Typen Gleitlagerelemente vor, welche unterschiedlich gestaltete Gleitlagerkörper aufweisen. Anstatt eines universellen Gleitlagerelements wird ist eine differenzierte Bauweise vorgesehen. Jeder Typ Gleitlagerelement/ Gleitlagerkörper weist nur solche Funktionsmerkmale auf, die im Betrieb benötigt werden.

Günstigerweise ist der erste Typ Gleitlagerkörper so gestaltet, dass dessen Innenkontur als Gleitlagerfläche hergerichtet ist und seine Außenkontur mit einem Fixiermittel zur ortsfesten Fixierung an einem Teleskopelement ausgebildet ist.

Darüber hinaus ist nützlich, wenn der zweite Typ Gleitlagerkörper so gestaltet ist, dass seine Außenkontur als Gleitlagerfläche hergerichtet ist und seine Innenkontur mit einem Fixiermittel zur ortsfesten Fixierung an einem Teleskopelement ausgebildet ist.

Die Bauweise der beiden Typen der Gleitlagerkörper unterscheidet sich in der Anordnung der Gleitlagerflächen, die entweder an der Innenkontur oder an der Außenkontur vorgesehen sind. Damit einher dient die jeweils andere Kontur (Innen- oder Außenkontur) der Fixierung des Gleitlagerkörpers an einem der Teleskopelemente. Auf eine universelle Gestaltung eines einzigen Typs Gleitlagerelement beziehungsweise Gleitlagerkörper wird verzichtet.

Zweckmäßig sind die Teleskopelemente mit komplementären Mitteln versehen, welche dafür hergerichtet sind mit einem Fixiermittel eines Gleitlagerkörpers zusammenzuwirken.

Hilfreich ist es beispielsweise für die Montage, wenn die Öffnung des C-förmigen Querschnitts des Gleitlagerkörpers vorübergehend vergrößerbar ist mittels elastischer Verformung des Gleitlagerkörpers.

Ein weiterer Nutzen wird darin gesehen, wenn das als Basiselement vorgesehene erste langgestreckte Teleskopelement mit einer Tragschiene versehen ist, und dass die Tragschiene entweder einen Querschnitt mit erhabenem Schienenkopf oder einen Querschnitt mit einer Schienenrille aufweist.

Vorteilhaft ist auch, wenn das als Abschlusselement vorgesehene zweite langgestreckte Teleskopelement mit einer Gleitschiene versehen ist, wobei die Gleitschiene komplementär zur Tragschiene des ersten langgestreckten Teleskopelements entweder einen Querschnitt mit erhabenem Schienenkopf oder einen Querschnitt mit einer Schienenrille aufweist.

Grundsätzlich wirkt jeweils die Tragschiene mit der Gleitschiene in der Weise zusammen, dass diese beiden relativ zueinander translatorisch bewegbar sind. Zweckmäßig ist die Tragschiene statisch und trägt die Last und die Gleitschiene bewegt sich auf der Tragschiene. Dafür weisen beide komplementäre Schienen Querschnitte auf, wie beispielsweise den erwähnten erhabenen Schienenkopf und die Schienenrille. Der Schienenkopf ist vorzugsweise nach oben gerichtet an der Tragschiene vorgesehen und die Schienenrille ist an der Gleitschiene mit der Öffnung des Rillenquerschnitts nach unten gerichtet. Zweckmäßig ist, wenn Schienenkopf und Schienenrille nicht unmittelbar in Kontakt sind, sondern zwischen diesen beiden eine Gleitlagerung vorgesehen ist, die in Form der beschriebenen beiden Typen der Gleitlagerkörper bereitgestellt sein kann.

Der Einsatzbereich lässt sich verbessern, wenn der Querschnitt der Schienenrille den Querschnitt des zugeordneten Schienenkopfes derart in Weise formschlüssig umgreift/ umfasst, dass die Schienenrille weder seitlich noch nach oben vom Schienenkopf getrennt werden kann. Getrennt werden können Schienenkopf und Schienenrille durch gegenseitiges Verschieben in Längsrichtung.

Um die formschlüssige Umfassung bereitzustellen umgreift die Schienenrille das Schienenelement zweckmäßig in einen Umfangsbereich von 200° bis 320°, vorzugsweise 270° bis 300°, besonders bevorzugt 280° bis 290°. Wenn ein Gleitlagerelement zwischengeschaltet ist, dann sind der umfasste Umfangsbereich der Schienenrille um den Schienenkopf sowie der umfasste Umfangsbereich des Gleitlagerelements um den Schienenkopf identisch oder nahezu identisch.

Ein weiterer Nutzen wird darin gesehen, wenn der Querschnitt des erhabenen Schienenkopfes komplementär zur Innenkontur der Gleitlagerkörper und der Querschnitt der Schienenrille komplementär zur Außenkontur der Gleitlagerkörper gestaltet ist. Durch diese Maßnahme wirken die Tragschiene und die Gleitschiene mit ihren erhabenen Schienenköpfen beziehungsweise mit den Schienenrillen jeweils als tragende Basis zur Halterung für die Gleitlagerkörper. Die Gleitlagerkörper erhalten auf diese Weise eine Stützung und Führung.

Ein weiterer Nutzen wird darin gesehen, wenn an einem Teleskopelement, welches eine Tragschiene mit erhabenem Schienenkopf oder eine Gleitschiene mit erhabenem Schienenkopf umfasst, jeweils der erste Typ Gleitlagerkörper applizierbar ist, dessen Außenkontur mit jenem Fixiermittel versehen ist, das zur ortsfesten Fixierung an dem jeweiligen Teleskopelement dient.

Gleichfalls nützt es, wenn an einem Teleskopelement, welches eine Tragschiene mit einer Schienenrille oder eine Gleitschiene mit einer Schienenrille umfasst, jeweils der zweite Typ Gleitlagerkörper applizierbar ist, dessen Innenkontur mit dem Fixiermittel versehen ist, das zur ortsfesten Fixierung an dem jeweiligen Teleskopelement dient.

Der Einsatzbereich der vorgeschlagenen Teleskopführung lässt sich erweitern, wenn wenigstens ein drittes langgestrecktes Teleskopelement als Zwischenelement vorgesehen ist. Das Zwischenelement ist als zweites Teleskopelement im Verhältnis zum Basiselement zu betrachten, welches das erste Teleskopelement darstellt. Im Verhältnis zum Abschlusselement kann hingegen das Zwischenelement als das erste Teleskopelement bezeichnet werden, welches dann als Basis für das Abschlusselement als zweitem Teleskopelement dient.

Hilfreich ist, wenn das Zwischenelement eine Gleitschiene umfasst, welche mit der Tragschiene des Basiselements zusammenwirkt sowie das Zwischenelement seinerseits eine Tragschiene umfasst, welche mit der Gleitschiene des Abschlusselements zusammenwirkt.

Das so weitergestaltete Zwischenelement kann formschlüssig gleitend mit dem Basiselement sowie formschlüssig gleitend mit dem Abschlusselement verbunden werden. Außerdem sind zwei oder mehr Zwischenelemente übereinander verbindbar, so dass sie formschlüssig gleitend zusammenwirken können. Auf diese Weise kann die Teleskopführung um weitere Teleskopelemente in Form von Zwischenelementen erweitert werden.

Eine zusätzliche Verbesserung wird erzielt, wenn die Teleskopelemente jeweils als Doppelschiene ausgebildet sind, wobei die Doppelschiene zwei parallele Tragschienen und/oder zwei parallele Gleitschienen aufweist.

Für ein als Doppelschiene ausgebildetes Zwischenelement ist zweckmäßig vorgesehen, zwei Doppelschienen übereinander anzuordnen, wovon eine mit parallelen Gleitschienen ausgestaltet und dem Basiselement zugewandt ist und die andere mit parallelen Tragschienen ausgestaltet und dem Abschlusselement zugewandt ist.

Vorteilhaft ist bei einer Doppelschiene jeweils zwischen einer der parallelen Schienen (Tragschiene oder Gleitschiene) und den zugeordneten Gleitlagerkörpern eine seitliche Führung bewirkbar ist, während zwischen den Gleitlagerkörpern der anderen der parallelen Schienen ein seitliches Spiel (Luft) vorgesehen ist.

Zweckmäßig ist das Basiselement mit einem Aufstellsockel versehen. Damit kann die Teleskopführung liegend (horizontal) verbaut werden. Sie lässt sich aber auch hochkant (vertikal) verbauen. Ein möglicher Einsatzzweck sind Schubladenführungen.

Darüber hinaus kann das Basiselement zwei Seitenelemente aufweisen, wobei die Seitenelemente zweckmäßig eine Höhe aufweisen, die ausreicht, um das oder die darüber angeordneten Teleskopelemente seitlich einzuhausen. Solche Seitenelemente dienen zumindest dem mechanischen Schutz und können einer Verschmutzung vorbeugen.

Überdies ist nützlich, wenn wenigstens eines der Seitenelemente als geschlossene Seitenwand ausgebildet ist. Dies verbessert den Schutz vor Verschmutzung des Innenraums der Teleskopführung.

Für das Abschlusselement ist hilfreich, wenn es eine Montageebene für etwaige Anbauteile aufweist.

Nutzbringend kann die Montageebene eine geschlossene Fläche sein. Dadurch kann der Innenraum der Teleskopführung vor Verschmutzung geschützt werden.

Zweckmäßig ist wenigstens eines der Teleskopelemente einstückig ausgebildet, vorzugsweise aus Metall, besonders bevorzugt aus Aluminium beziehungsweise einer Aluminiumlegierung. Aluminium beziehungsweise eine Aluminiumlegierung lässt sich durch Strangpressen herstellen. Dies Maßgenauigkeit und Formgenauigkeit sowie die Qualität der so erzielbaren Oberflächen ist für Teleskopelement ausreichend. Insbesondere sind auch die als Gleitflächen benötigten Bereiche stranggepresster Teleskopelemente von ausreichender Maß- und Formhaltigkeit sowie ausreichender Oberflächenqualität. Zweckmäßig weist das Aluminiummaterial eine eloxierte Oberfläche auf.

Vorzugsweise weisen alle Teleskopelemente der Teleskopführung eine einheitliche Gesamtlänge auf. Zwischen zwei Teleskopelementen ist eine Auszugslänge vorgesehen, die einen Bruchteil dieser Gesamtlänge beträgt. Vorzugsweise liegt diese Auszugslänge in einem Bereich von 30% - 70% der Gesamtlänge, vorzugsweise 50% der Gesamtlänge eines Teleskopelements.

Die hülsenförmigen Gleitlagerkörper mit ihrer seitlichen Öffnung können aus Kunststoff hergestellt sein, vorzugsweise in Form von polymerem Gleitwerkstoff, besonders bevorzugt aus einem solchen Gleitwerkstoff mit einem verstärkenden Füllstoff, wie Fasern aus Kunststoff oder Textil.

Unter einem Gleitwerkstoff ist vorliegend ein polymerer Werkstoff zu verstehen, der einen geringeren Reibungskoeffizienten aufweist, als jene Oberfläche des Teleskopelements, die als Gleitfläche dient. Insbesondere zählen dazu die Thermoplaste Polyethen, Polypropylen, Polyacetal, Polycarbonat, Polyamid, Polyvinylchlorid, Polytetrafluorethen sowie bei den Duroplasten Phenolharze. Zur weiteren Verminderung der Reibung können diese Kunststoffe Schmiermittel, insbesondere feinteilige Feststoffschmiermittel wie Molybdändisulfid oder Graphit, enthalten. Solche Polymere werden auch als Tribopolymere bezeichnet. Mit der Reibung vermindert sich der Verschleiß und der Abrieb wird geringer. Deshalb empfehlen sich diese Produkte besonders dann, wenn es auf hohe Reinheit ankommt. Dies ist beispielsweise in der Lebensmittel- und Halbleiterindustrie der Fall, sowie bei biochemischen und mikrobiologischen Anwendungen. Wie erwähnt, können diese Polymerwerkstoffe ferner Füllstoffe und Faserstoffe enthalten, zum Beispiel solche aus Kunststoff oder Textil, welche die mechanischen Eigenschaften verbessern.

Die vorgeschlagene Teleskopführung lässt sich sehr solide ausführen, insbesondere wenn eine Kombination von Kunststoff- und Aluminiummaterialien zum Einsatz kommt.

Die Teleskopelemente werden im Einsatz üblicher auf Biegung beansprucht. Deswegen sind diese aus einem Material hergestellt, das eine hohe Biegesteifigkeit aufweist, vorzugsweise aus einem Metall, wie dem erwähnten Aluminiummaterial.

In einer Anwendung als Schubladenführung hochkant verbaut, hat sich in einem Labortest gezeigt, dass zwei Teleskopführungen mit einer Auszugslänge von 400 mm in Griffnähe eine statische Last von bis zu 180 N standhalten.

Durch den Einsatz von Aluminiummaterial profitiert die Teleskopführung von einem noch weiter reduzierten Gesamtgewicht.

Sie weist darüber hinaus eine sehr gute Korrosionsbeständigkeit auf. Ihre Gleitlagerung benötigt kein Schmiermittel. Durch den Verzicht auf Schmiermittel kann kein Schmutz an Bauteilen der Teleskopführung anhaften, was die Betriebssicherheit begünstigt. Etwaiger aufliegender Schmutz lässt sich mit Hochdruckreinigern und/oder unter Einsatz von Reinigungsmittel beseitigen. Die Teleskopführung ist daher wartungsarm und kostengünstig.

Nachstehend ist die Erfindung in einer Zeichnung beispielhaft veranschaulicht und anhand mehrerer Figuren detailliert beschrieben. Es zeigen:
- Fig. 1: eine Vorderansicht eines ersten Ausführungsbeispiels der erfindungsgemäßen Teleskopführung mit zwei Teleskopelementen,
- Fig. 2a: eine schematische Seitenansicht der Teleskopführung gemäß Fig. 1 im eingefahrenen Zustand,
- Fig. 2b: eine schematische Seitenansicht der Teleskopführung gemäß Fig. 1 in einem teilweise ausgefahrenen Zustand,
- Fig. 2c: eine schematische Seitenansicht der Teleskopführung gemäß Fig. 1 im maximal ausgefahrenen Zustand,
- Fig. 3: eine Vorderansicht eines zweiten Ausführungsbeispiels der erfindungsgemäßen Teleskopführung mit drei Teleskopelementen,
- Fig. 4: eine perspektivische Ansicht auf die Rückseite des zweiten Ausführungsbeispiels ohne das obere Teleskopelement,
- Fig. 5: eine perspektivische Ansicht eines Gleitlagerele- ments mit hülsenförmigem Gleitlagerkörper, der innenliegende Gleitlagerflächen sowie außenliegende formschlüssige Fixiermittel aufweist,
- Fig. 6: ein perspektivischer Ausschnitt auf ein Teleskopelement mit komplementären Mitteln, die hergerichtet sind für die äußeren Fixiermittel des Gleitlagerelements gemäß Fig. 5,
- Fig. 7: eine perspektivische Ansicht eines Gleitlagerelements mit hülsenförmigem Gleitlagerkörper, der außenliegende Gleitlagerflächen sowie innenliegende formschlüssige Fixiermittel aufweist,
- Fig. 8: ein perspektivischer Ausschnitt auf ein Teleskopelement mit komplementären Mitteln, die hergerichtet sind für die inneren Fixiermittel des Gleitlagerelements gemäß Fig. 7,
- Fig. 9: eine Detailansicht gemäß IX in Fig. 3,
- Fig. 10: eine Detailansicht gemäß X in Fig. 9,
- Fig. 11: eine Detailansicht gemäß XI in Fig. 3,
- Fig. 12: eine Detailansicht gemäß XII in Fig. 11,
- Fig. 13: ein drittes Ausführungsbeispiel der erfindungsgemäßen Teleskopführung mit zwei Teleskopelementen,
- Fig. 14: einer viertes Ausführungsbeispiel der erfindungsgemäßen Teleskopführung mit drei Teleskopelementen.

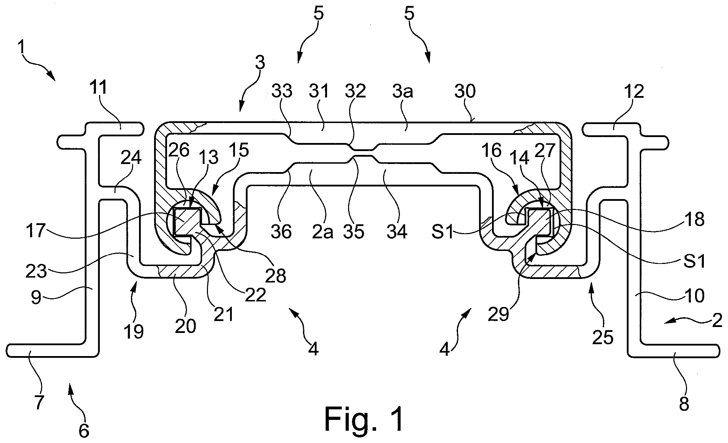

Fig. 1 zeigt ein erstes Ausführungsbeispiel der erfindungsgemäßen Teleskopführung 1 und zwar eine Ansicht von vorne. Danach umfasst die Teleskopführung 1 zwei langgestreckte Teleskopelemente 2 und 3 und zwar ein unten angeordnetes Basiselement 2a sowie ein darüber angeordnetes Abschlusselement 3a, welches das zweite langgestreckte Teleskopelement 3 bildet. Diese beiden Teleskopelemente sind parallel zueinander angeordnet und in einer Längsrichtung relativ zueinander bewegbar. Die Längsrichtung verläuft relativ zur Ebene dieser Vorderansicht orthogonal.

Die Teleskopelemente 2 und 3 dieses Ausführungsbeispiels sind jeweils als Doppelschiene 4 beziehungsweis 5 ausgebildet. Das Basiselement 2 ist symmetrisch aufgebaut. Es ist mit einem Aufstellsockel 6 versehen, der symmetrische Grundplatten 7 und 8, Seitenwände 9 und 10 und Oberleisten 11 und 12 aufweist. Die Grundplatten dienen zum Aufstellen oder zur Montage der Teleskopführung 1 an einer Fläche. Des Weiteren weist das Basiselement 2a zwei Tragschienen 13 und 14 auf, die relativ zum Aufstellsockel 6 nach oben gerichtet sind. Die Tragschienen 13 und 14 wirken mit Gleitschienen 15 und 16 des Abschlusselements 3a zusammen. Dafür sind die Tragschienen jeweils mit einem viereckigen Querschnitt versehen, der einen erhabenen Schienenkopf 15 beziehungsweise 16 bildet. Die Tragschiene 13 ist mittels eines Haltesteges 19 mit der Seitenwand 9 des Basiselements 2a verbunden. Der Haltesteg 19 weist ein unteres Querstück 20 auf, an dem ein Haltestück 21 nach oben reichend angeordnet ist. Das Haltestück 21 ist mit einem geneigten Haltearm 22 versehen, an dem der viereckige Querschnitt des Schienenkopfes 17 ausbildet ist. Des Weiteren weist der Haltesteg 19 ein Mittelstück 23 auf, das parallel zur Seitenwand 9 des Basiselements 2a angeordnet ist und an einem oberen Ende einen oberen Verbindungssteg 24 aufweist, der bis zur Seitenwand 9 des Basiselements 2a reicht. Der obere Verbindungssteg 24 trifft orthogonal auf die Seitenwand 9 und liegt etwas höher als der viereckige Querschnitt des Schienenkopfes 17. Der Haltesteg 19 ist einstückig mit der Tragschiene 13 und dem Basiselement 2a ausgebildet. Die Tragschiene 14 der anderen Seite ist mittels eines symmetrisch aufgebauten Haltestegs 25 gleichfalls einstückig mit dem Basiselement 2a ausgebildet.

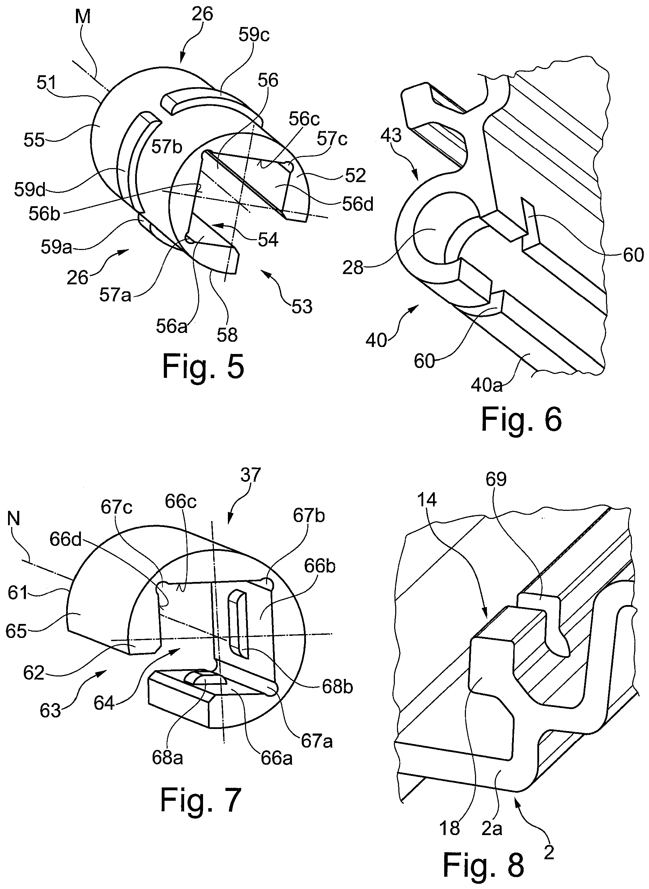

Auf dem Schienenkopf 17 sitzt ein Gleitlagerelement 26 und auf dem anderen Schienenkopf 18 ein Gleitlagerelement 27. Jedes der Gleitlagerelemente 26/27 hat seinerseits eine viereckige Innenkontur und weist eine kreisrunde Außenkontur auf. Die Gleitlagerelemente 26/27 sind identisch. Grundsätzlich sind jedoch zwei unterschiedliche Typen von Gleitlagerelementen vorgesehen, die weiter unten anhand von Fig. 5 und Fig. 7 detailliert beschrieben sind.

Anhand von Fig. 1 ist des Weiteren erkennbar, dass beide Gleitschienen 15 und 16 des Abschlusselements 3a als Schienenrille 28 beziehungsweise Schienenrille 29 ausgeführt sind.

Der Schienenkopf 18 der Tragschiene 14 ist etwas schmaler ausgebildet als der Schienenkopf 17 der Tragschiene 13. Dadurch behält der Schienenkopf 18 ein gewisses seitliches Spiel S1 (Luft). Deswegen übernimmt der Schienenkopf 17 der Tragschiene 13 zusammen mit dem zugeordneten Gleitlagerelemente 26 die seitliche Führung, während der Schienenkopf 18 der Tragschiene 14 etwaige Maßabweichungen in der Spurweite der Doppelschiene und/oder etwaige Abweichungen von der idealen Parallelität der Tragschienen gewissermaßen ausgleichen zu kann. Bei einer horizontalen Verwendung der vorgeschlagenen Teleskopführung kann der Schienenkopf 18 zusammen mit der Tragschiene 14 einen Teil einer Auflast tragen, ohne jedoch seitliche Führung zu bieten.

Das Abschlusselement 3a ist zuoberst mit einer Montageebene 30 versehen, beispielsweise einer ebenen Montagefläche 30a. Die Montagefläche 30a ist an einem Steg 31 ausgebildet, welcher die beiden Gleitschienen 15/16 verbindet. Der Querschnitt des Stegs 31 weist eine gewisse Materialdicke auf und ist symmetrisch gestaltet. In der Mitte weist der Steg 31 die größte Materialdicke auf. Bevorzugt ist eine Abnahme der Materialdicke zu beiden Seiten hin vorgesehen. Besonders bevorzugt erfolgt die Abnahme der Materialdicke symmetrisch in Stufen 32 beziehungsweise 33.

Das Basiselement 2a ist ebenfalls mit einem Steg 34 versehen. Dieser Steg 34 verbindet die beiden Tragschienen 13/14. Auch dieser Steg 34 weist einen Querschnitt mit einer Materialdicke auf, die in der Mitte am größten ist. Bevorzugt ist eine Abnahme der Materialdicke zu beiden Seiten hin vorgesehen. Besonders bevorzugt erfolgt die Abnahme der Materialdicke auch hier in Stufen 35 beziehungsweise 36.

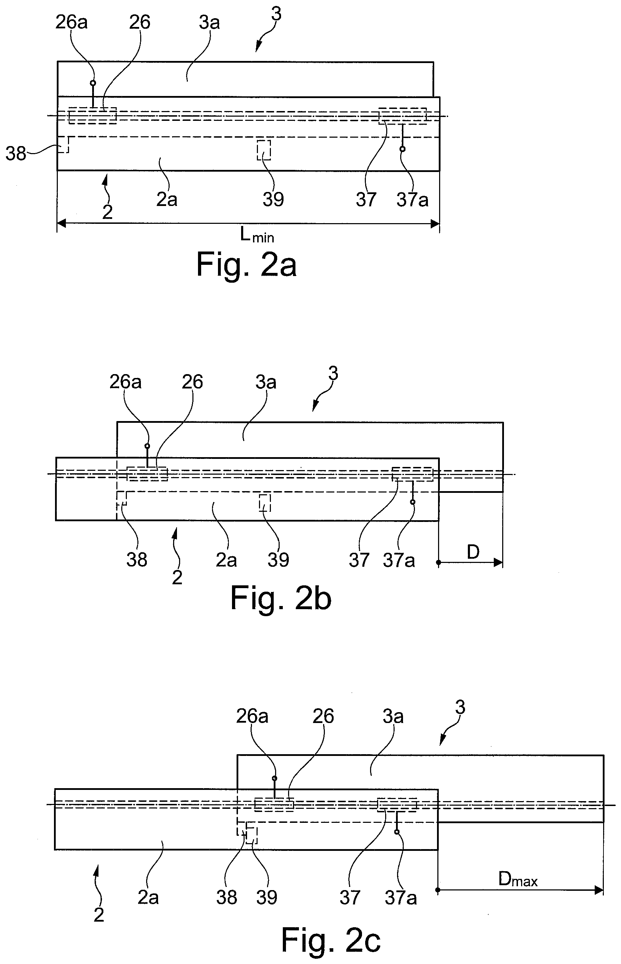

Die Figuren 2a - 2c zeigen je eine schematische Seitenansicht auf die doppelschienig ausgeführte Teleskopführung 1 gemäß Fig. 1. Nach Fig. 2a ist die Teleskopführung im eingefahrenen Zustand dargestellt sowie in Fig. 2b teilweise ausgefahren und anhand von Fig. 2c im maximal ausgefahrenen Zustand.

Fig. 2a zeigt die zwei langgestreckten Teleskopelemente 2 und 3 im eingefahrenen Zustand. D. h. die kürzest mögliche Gesamtlänge Lₘᵢₙ der Teleskopführung 1. Das untere Teleskopelement 2 ist das Basiselement 2a und das obere Teleskopelement 3 ist das Abschlusselement 3a. In deren Längserstreckung sind zwei Gleitlagerelemente 26 und 37 dargestellt, welche einer Schienenseite der Doppelschiene zugeordnet sind, d. h. insgesamt weist die Teleskopführung vier Gleitlagerelemente auf. Symbolhaft ist ein Fixiermittel 26a dargestellt, mit dem das Gleitlagerelement 26 an dem Teleskopelemente 3 fixiert ist. Im Unterschied dazu ist das Gleitlagerelement 37 mittels eines Fixiermittels 37a an dem Teleskopelemente 2 (Basiselement 2a) fixiert. Auf diese Weise ist das Gleitlagerelement 26 gemeinsam mit dem oberen Teleskopelement 3 bewegbar, d. h. mit dem Abschlusselement 3a.

Des Weiteren ist das Abschlusselement 3a mit einem Anschlagmittel 38 versehen, das mit einem Stopper 39 zusammenwirkt, der an dem Basiselement 2a vorgesehen ist.

Nach Fig. 2b ist das obere Teleskopelement 3 um die Distanz D teilweise ausgefahren. Das daran fixierte Gleitlagerelement 26 hat sich um dieselbe Distanz mitbewegt und das Anschlagmittel 38 hat den Abstand zum Stopper 39 verkürzt.

In Fig. 2c ist die Teleskopführung 1, respektive das Teleskopelement 3 um die maximale Auszugslänge Dₘₐₓ ausgefahrenen. Das Anschlagmittel 38 ist mit dem Stopper 39 in Kontakt gekommen und begrenzt auf diese Weise die Auszugslänge auf dieses Maximum. Ohne eine solche Begrenzung könnten die Auszugslänge weiter reichen bis die Gleitlagerelemente 26 und 37 aneinanderstoßen würden. Dies ist im Prinzip möglich, wird aus Stabilitätsgründen aber eher vermieden. Sicherheitshalber wird mittels der vorgeschlagenen Begrenzung eine gewisse Biegefestigkeit der gesamten Teleskopführung 1 gewährleistet. Im gezeigten Beispiel entspricht die maximale Auszugslänge Dₘₐₓ etwa 50% der in Fig. 2a gezeigten kürzest möglichen Gesamtlänge Lₘᵢₙ der Teleskopführung 1.

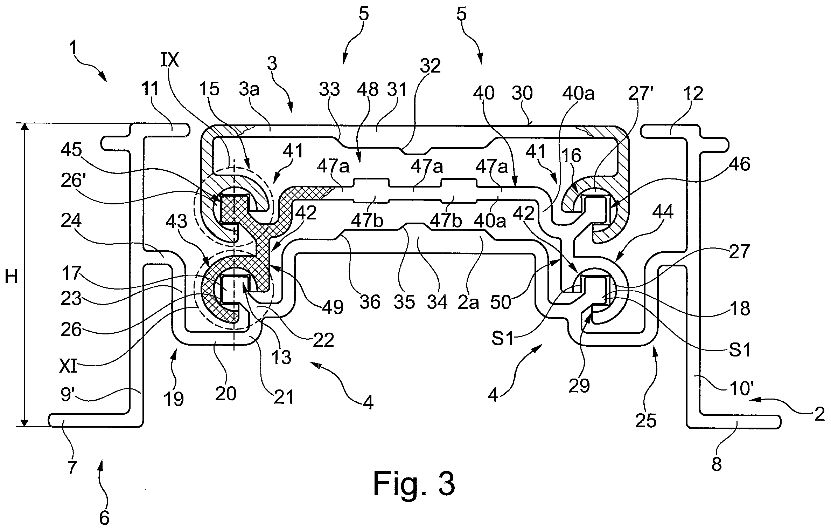

Fig. 3 zeigt eine Vorderansicht auf ein zweites Ausführungsbeispiel der erfindungsgemäßen Teleskopführung. Die zweite Ausführung umfasst drei Teleskopelemente. Das obere Teleskopelemente 3 ist als Abschlusselement 3a vorgesehen. Es ist identisch mit demjenigen der Fig. 1. Das untere als Basiselement 2a vorgesehene Teleskopelement 2 weist im Vergleich zu Fig. 1 höhere Seitenwände 9' und 10' sowie eine größere Gesamthöhe H auf als dasjenige der Fig. 1. Im Übrigen ist es jedoch identisch mit Fig. 1. Für das obere und untere Teleskopelement 2 und 3 sind in Fig. 3 identische Merkmale mit denselben Bezugszeichen vermerkt, wie in Fig. 1. Ein zusätzliches drittes Teleskopelement 40 ist als ein Zwischenelement 40a ausgebildet. Es wirkt mit dem unterhalb befindlichen Basiselement 2a sowie mit dem oberhalb befindlichen Abschlusselement 3a gleitend zusammen. Wiederum sind alle drei Teleskopelemente jeweils als Doppelschiene ausgebildet. Damit das Zwischenelement 40a oben und unten mit den benachbarten Teleskopelementen 2 und 3 zusammenwirken kann ist es seinerseits mit zwei übereinander angeordneten Doppelschienen 41 und 42 versehen. Seine untere Doppelschiene 42 weist parallele Gleitschienen 43 und 44 auf, die mit den Tragschienen des Basiselements 2a zusammenwirken, während die obere Doppelschiene 41 mit parallelen Tragschienen 45 und 46 versehen ist, die mit den Gleitschienen 15 und 16 des Abschlusselements 3a zusammenwirken. Auf dem Schienenkopf 17 der Tragschiene 13 ist ein Gleitlagerelement 26 vorgesehen und ein Schienenkopf der Tragschiene 45 des Zwischenelements 40a ist einem Gleitlagerelement 26' desselben Typs versehen. Die andere Symmetrieseite des Zwischenelements 40a ist mit Gleitlagerelementen 27 und 27' versehen.

Das Zwischenelement 40a ist mit einem symmetrisch aufgebauten Steg 47 versehen. Der Steg 47 ist oben angeordnet, so dass seine Oberseite 48 über die Tragschienen 45/46 des Zwischenelements 40a hinaus reicht. Er verbindet zwei symmetrische Seitenbereiche 49 und 50 des Zwischenelements 40a. Der Seitenbereich 49 umfasst die Gleitschiene 43 und darüber angeordnet die Tragschiene 45. An dem Seitenbereich 50 ist die Gleitschiene 44 und darüber die Tragschiene 46 vorgesehen. Die Tragschienen 45/46 zählen zur oberen Doppelschiene 41 des Zwischenelements 40a und sie sind als erhabene Schienenköpfe ausgestaltet, deren Gestaltung mit der Gestaltung der erhabenen Schienenköpfe 13/14 des Basiselements der Fig. 1 übereinstimmt, auf das Bezug genommen wird. Die Gleitschienen 43 und 44 zählen zur unteren Doppelschiene 42 des Zwischenelements 40a und sie sind als Schienenrillen ausgestaltet, deren Gestaltung mit der Gestaltung der Schienenrillen 15/16 des Abschlusselements 3a übereinstimmt, welches identisch ist mit dem Abschlusselements 3a der Fig. 1. Der erwähnte Steg 47 des Zwischenelements 40a weist drei Bereiche 47a mit konstanter Materialstärke auf. Dazwischen sind zwei Bereiche 47b mit einer größeren Materialstärke 47b vorgesehen.

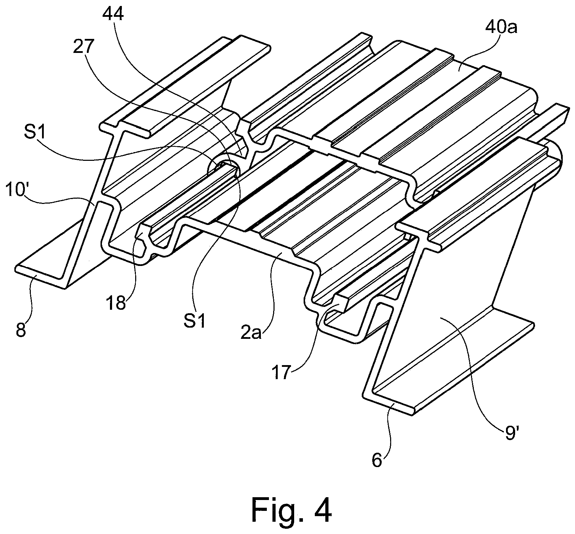

Fig. 4 zeigt eine perspektivische Ansicht auf die Rückseite des zweiten Ausführungsbeispiels der Fig. 3, wobei jedoch nur zwei seiner Teleskopelemente gezeigt sind und zwar das Basiselement 2a sowie das Zwischenelement 40a. Das Abschlusselement ist in dieser Darstellung weggelassen worden. In der Perspektive ist das Zwischenelement 40a in einer ausgefahrenen Position relativ zum Basiselement 2a gezeichnet. Weil hier die Rückseite gezeigt ist, befindet sich links in der Abbildung die Tragschiene 14 mit dem schmaleren Schienenkopf 18. Auf dieser Seite der Doppelschiene ergibt sich der Spalt S1. Im Übrigen ist das Gleitlagerelement 27 in der Gleitschiene 44 fixiert und wird gleitend mitbewegt, wenn das Zwischenelement 40a ein- oder ausfährt.

Die Details der beiden oben erwähnten unterschiedlichen Typen des Gleitlagerelements sind nachfolgend anhand von Fig. 5 und Fig. 7 detailliert beschrieben. Fig. 5 zeigt den Typ Gleitlagerelement 26, der in Fig. 4 erkennbar ist.

Das Gleitlagerelement 26 ist in Figs. 1 - 3 enthalten. Gemäß Fig. 5 ist es als erster Typ hülsenförmiger Gleitlagerkörper 51 ausgestaltet und weist einen C-förmigen Querschnitt 52 auf. Seitlich ist an dem Gleitlagerkörper 51 eine Öffnung 53 ausgebildet. Außerdem ist eine Innenkontur 54 vorgesehen, die sich in einer axialen Richtung M des Gleitlagerkörper 51 erstreckt. Ebenso erstreckt sich eine Außenkontur 55 in der Richtung einer Mittelachse M. Die Innenkontur 54 und Außenkontur 55 sind konzentrisch zueinander und zu einer Mittelachse M angeordnet, was eine kompakte Gestaltung dieses Gleitlagerelements 26 schafft.

Die Innenkontur 54 des Gleitlagerkörpers 51 weist einen quadratischen Querschnitt 56 auf, wodurch sich vier Innenlagerflächen 56a, 56b, 56c und 56d ergeben. An den Ecken aneinandergrenzender Innenlagerflächen sind kehlförmige Vertiefungen 57a, 57b, 57c vorgesehen. Die Innenkontur 54 ist durch die seitliche Öffnung 53 des Gleitlagerkörpers 51 unterbrochen, wobei trotz der Unterbrechung im Sinne dieser Erfindung vereinfacht der Querschnitt der Innenkontur 54 als quadratisch bezeichnet ist. Die konzentrisch angeordnete Außenkontur 55 weist einen kreisförmigen Querschnitt 58 auf, der ebenfalls unterbrochen ist und trotzdem vereinfacht als kreisförmig beziehungsweise die Außenkontur 55 als zylindrisch bezeichnet wird.

Beim Gleitlagerelement 26 der Fig. 5 dient die Innenkontur 54 als Gleitlagerfläche, beziehungsweise dienen die vier Innenlagerflächen 56a, 56b, 56c und 56d zur Gleitlagerung.

Die Außenkontur 55 ist mit einem Fixiermittel versehen, das im eingebauten Zustand formschlüssig mit einem Teleskopelement zusammenwirkt. Das Fixiermittel umfasst gemäß Fig. 5 Rippen 59a, 59b und 59c, die von der zylindrischen Außenkontur 55 in radialer Richtung hervorstehen.

Fig. 6 zeigt anhand eines perspektivischen Ausschnitt am dritten Teleskopelement 40 (Zwischenelement 40a) eine Stelle, die mit einem komplementären Mittel versehen ist, welches mit dem Fixiermittel des Gleitlagerelements 26 der Fig. 5 zusammenwirken. Zu sehen ist die Gleitschiene 43, die als Schienenrille 28 mit C-förmigem Querschnitt ausgebildet ist.

Das komplementäre Mittel umfasst eine nutartige Ausnehmung 60 in der Schienenrille 28. Die Ausnehmung 60 ist passend für die radialen Rippen 59a-59c des Gleitlagerelements 26 der Fig. 5 ausgebildet. Auf diese Weise kann das Teleskopelement 40, wenn es translatorisch bewegt wird, das formschlüssige Gleitlagerelement 26 mitbewegen, wie in Fig. 4 zu erkennen.

Fig. 7 zeigt den zweiten Typ Gleitlagerelement 37. Das Gleitlagerelement 37 ist in den Figs. 2a-c enthalten. Es ist als zweiter Typ hülsenförmiger Gleitlagerkörper 61 ausgestaltet und weist einen C-förmigen Querschnitt 62 auf. Auch hier ist seitlich an dessen Gleitlagerkörper eine Öffnung 63 ausgebildet. Ebenfalls ist eine Innenkontur 64 vorgesehen, die sich in Richtung einer Mittelachse N des Gleitlagerkörpers 61 erstreckt sowie eine Außenkontur 65, die sich in derselben Richtung erstreckt.

Die Innenkontur 64 und die Außenkontur 65 sind relativ zu einer Mittelachse N konzentrisch angeordnet, so dass auch dieses Gleitlagerelement 37 eine kompakte Gestaltung aufweist.

Die Innenkontur 64 weist einen quadratischen Querschnitt 66 auf, wodurch sich vier Innenflächen 66a, 66b, 66c und 66d ergeben. An den Ecken aneinandergrenzender Innenflächen sind kehlförmige Vertiefungen 67a, 67b und 67c vorgesehen. Die Innenflächen wirken jedoch nicht als Gleitlagerflächen. Stattdessen ist die Innenkontur 64 mit einem Fixiermittel versehen, das im eingebauten Zustand formschlüssig mit einem Teleskopelement zusammenwirkt. Das Fixiermittel umfasst gemäß Fig. 7 Rippen, von denen die zwei Rippen 68a und 68b sichtbar sind. Sie ragen von der betreffenden Innenfläche 66a und 66b nach innen.

Fig. 8 zeigt anhand eines perspektivischen Ausschnitts am ersten Teleskopelement 2 (Basiselement 2a) eine Stelle, die mit einem komplementären Mittel versehen ist, welches mit dem Fixiermittel des Gleitlagerelements 37 der Fig. 7 zusammenwirkt. Zu sehen ist die Tragschiene 14, die als erhabener Schienenkopf 18 mit viereckigem Querschnitt ausgebildet ist.

Der erhabene Schienenkopf 18 ist mit einer nutförmigen Ausnehmung 69 versehen, mit der die erhabenen Rippen des Gleitlagerelements 37 formschlüssig zusammenpassen. Auf diese Weise ist das Gleitlagerelement 37 an dem Basiselement 2a fixiert. Als Gleitlagerfläche dient die zylindrische Außenkontur des Gleitlagerelements 37, wenn diese mit einer Gleitschiene zusammenwirkt.

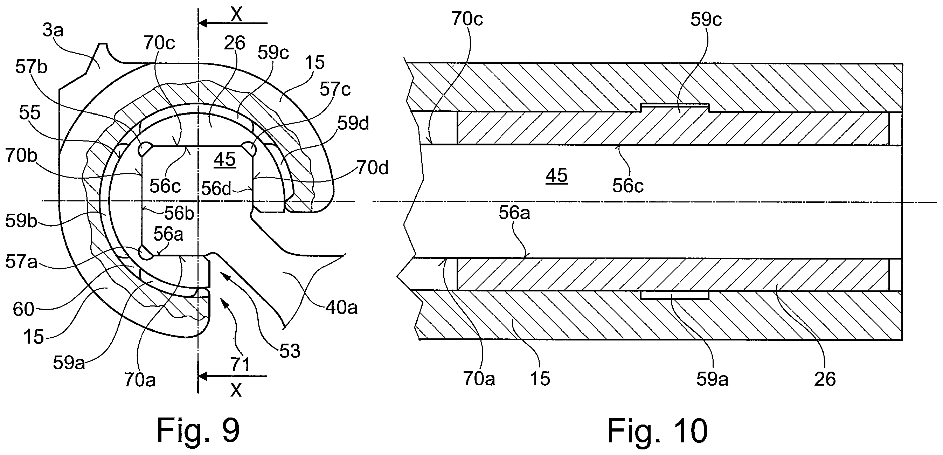

Fig. 9 zeigt eine Detailansicht gemäß IX in Fig. 3. Zu sehen ist das Gleitlagerelement 26, das jenem in Fig. 5 entspricht. Das Gleitlagerelement 26 weist einen quadratischen Querschnitt 56 auf und ist an seiner Innenkontur 54 mit Innenlagerflächen 56a-d versehen, welche gleitend auf dem Schienenkopf der Tragschiene 45 des Zwischenelements 40a lagern. Die zylindrische Außenkontur 55 des Gleitlagerelements 26 ist in der Gleitschiene 15 des Abschlusselements 3a eingepasst, die als Schienenrille 28 ausgebildet ist. Die Außenkontur 55 weist vier radial hervorstehende Rippen 59a-d auf, die formschlüssig in eine Ausnehmung 60 der Schienenrille 28 passen. Das Gleitlagerelement 26 gleitet somit auf dem Schienenkopf der Tragschiene 45 des Zwischenelements 40a. Der Schienenkopf weist Gleitlagerflächen 70a-d auf. Die Schienenrille hat einen C-förmigen Querschnitt mit im Wesentlichen nach unten gerichtete Öffnung 71, die sich mit der seitlichen Öffnung 53 des Gleitlagerelements 26 deckt. Die Innenseite der Schienenrille ist an die zylindrische Außenkontur 55 des Gleitlagerelements 26 angepasst. Im eingebauten Zustand lassen die seitliche Öffnung 53 und die Öffnung 71 Platz für den einen schräg angeordneten Haltearm des Zwischenelements 40a, der den viereckigen Querschnitt des Schienenkopfes der Tragschiene 45 einstückig mit dem Zwischenelement 40a verbindet.

Fig. 10 zeigt eine Detailansicht gemäß X in Fig. 9. Die Ansicht ist ein Längsschnitt durch die Gleitschiene 15 mit darin fixiertem Gleitlagerelement 26. Dieses weist an seiner Außenkontur 55 Fixiermittel in Form der radialen Rippen 59a und 59c auf, mit denen es formschlüssig in der Gleitschiene 15 fixiert ist. Die Rippen 59a und 59c stehen an der Außenkontur 55 des Gleitlagerelements 26 radial hervor. Die Innenkontur 54 des Gleitlagerelements 26 bildet Gleitlagerflächen 56a und 56c, die auf dem Schienenkopf der Tragschiene 45 angeordnet sind und darauf gleiten können.

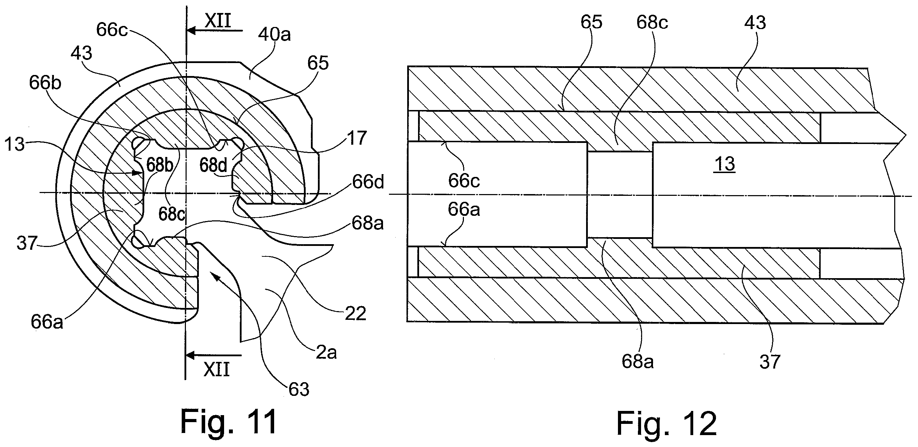

Fig. 11 zeigt eine Detailansicht gemäß XI in Fig. 3. Zu sehen ist das Gleitlagerelement 37, das jenem in Fig. 7 entspricht. Dieses Gleitlagerelement 37 sitzt mit dem quadratischen Querschnitt seiner Innenkontur 64, welche vier Innenflächen 66a-d aufweist, auf dem Schienenkopf 17 der Tragschiene 13 des Basiselements 2a. Seine zylindrische Außenkontur 65 ist in der Gleitschiene 43 des Zwischenelements 40a eingepasst, die als Schienenrille ausgebildet ist. Hier ist die Innenkontur 64 des Gleitlagerelements 37 mit vier Rippen 68a-d versehen, die nach innen ragen und formschlüssig in eine Ausnehmung 69 passen, die gemäß Fig. 12 beispielhaft am viereckigen Querschnitt des Schienenkopfes 18 dargestellt ist. Für die Tragschiene 13 und den Schienenkopf 17 ist eine identische Ausnehmung vorgesehen. Die Gleitbewegung findet zwischen der Gleitschiene 43 des Zwischenelements und der zylindrischen Außenkontur 65 des Gleitlagerelements 37 statt, das an der Tragschiene 13 des Basiselements 2a fixiert ist.

Fig. 12 zeigt eine Detailansicht gemäß XII in Fig. 11. Diese Ansicht ist ein Längsschnitt durch die Gleitschiene 43 mit dem darin fixierten Gleitlagerelement 37. Dieses Gleitlagerelement weist an seiner Innenkontur 64 Fixiermittel in Form von Rippen 68a und 68c auf, die nach innen ragen und formschlüssig mit einer nutförmigen Ausnehmung, wie jener Ausnehmung 69 in Fig. 11. Damit ist das Gleitlagerelement 37 formschlüssig an der Tragschiene 13 fixiert. Hier bildet die zylindrische Außenkontur 65 eine zylindrische Gleitlagerfläche, auf der die Gleitschiene 43 gleiten kann.

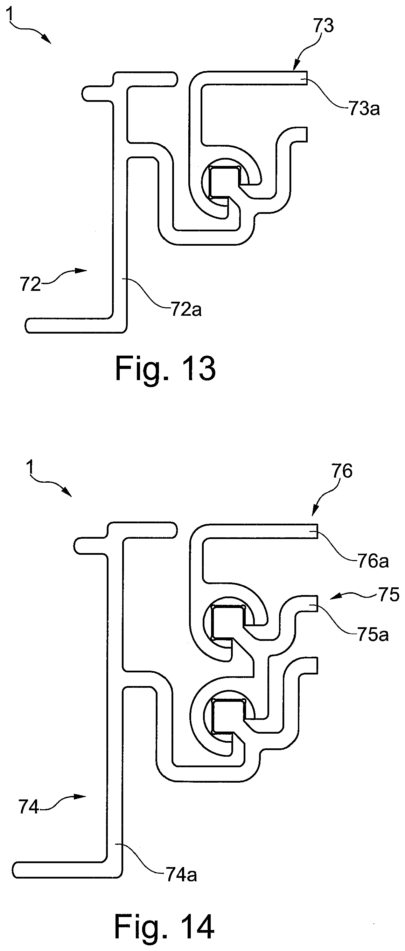

Fig. 13 zeigt ein drittes Ausführungsbeispiel der erfindungsgemäßen Teleskopführung 1, die wiederum zwei Teleskopelemente 72 und 73 umfasst, ein Basiselement 72a und ein Abschlusselement 73a. Im Unterschied zum ersten Ausführungsbeispiel, dessen Teleskopelemente als Doppelschiene ausgeführt sind, sieht Fig. 13 jedoch Teleskopelemente in Form von Einzelschienen vor. Im Übrigen stimmt die Konstruktion mit einer Symmetrieseite des Ausführungsbeispiels der Fig. 1 überein.

Fig. 14 zeigt ein viertes Ausführungsbeispiel der erfindungsgemäßen Teleskopführung 1, die wie Fig. 3 mit drei Teleskopelementen 74, 75 und 76 versehen ist, einem Basiselement 74a, einem Zwischenelement 75a und einem Abschlusselement 76a. Im Unterschied zum ersten Ausführungsbeispiel, dessen Teleskopelemente jeweils als Doppelschiene ausgeführt sind, handelt sich bei Fig. 14 um drei Teleskopelemente in Form von Einzelschienen. Im Übrigen stimmt die Konstruktion mit einer Symmetrieseite des Ausführungsbeispiels der Fig. 3 überein.

### Bezugszeichenliste

- 1: Teleskopführung
- 2: Teleskopelement
- 2a: Basiselement
- 3: Teleskopelement
- 3a: Abschlusselement
- 4: Doppelschiene
- 5: Doppelschiene
- 6: Aufstellsockel
- 7: Grundplatte
- 8: Grundplatte
- 9: Seitenwand
- 9' 10: Seitenwand Seitenwand
- 10': Seitenwand
- 11: Oberleiste
- 12: Oberleiste
- 13: Tragschiene
- 14: Tragschiene
- 15: Gleitschiene
- 16: Gleitschiene
- 17: Schienenkopf
- 18: Schienenkopf
- 19: Haltesteg
- 20: Querstück
- 21: Haltestück
- 22: Haltearm
- 23: Mittelstück
- 24: Verbindungsteg
- 25: Haltesteg
- 26: Gleitlagerelement
- 26a: Fixiermittel
- 26': Gleitlagerelement
- 27: Gleitlagerelement
- 27': Gleitlagerelement
- 28: Schienenrille
- 29: Schienenrille
- 30: Montageebene
- 30a: Montagefläche
- 31: Steg
- 32: Stufe
- 33: Stufe
- 34: Steg
- 35: Stufe
- 36: Stufe
- 37: Gleitlagerelement
- 37a: Fixiermittel
- 38: Anschlagmittel
- 39: Stopper
- 40: Teleskopelement
- 40a: Zwischenelement
- 41: Doppelschiene
- 42: Doppelschiene
- 43: Gleitschiene
- 44: Gleitschiene
- 45: Tragschiene
- 46: Tragschiene
- 47: Steg
- 47a: Bereich
- 47b: Bereich
- 48: Oberseite
- 49: Seitenbereich
- 50: Seitenbereich
- 51: Gleitlagerkörper
- 52: C-förmiger Querschnitt
- 53: Seitliche Öffnung
- 54: Innenkontur
- 55: Außenkontur
- 56a-d: Innenlagerfläche
- 57: kehlförmige Vertiefung
- 58a-c: kreisförmiger Querschnitt
- 59a-c: Rippe (radial)
- 60: nutförmige Ausnehmung
- 61: Gleitlagerkörper
- 62: C-förmiger Querschnitt
- 63: Seitliche Öffnung
- 64: Innenkontur
- 65: Außenkontur
- 66a-d: Innenfläche
- 67a-c: kehlförmige Vertiefung
- 68a/b: Rippe
- 69: nutförmige Ausnehmung
- 70a-d: Gleitlagerfläche
- 71: Öffnung
- 72: Teleskopelement
- 72a: Basiselement
- 73: Teleskopelement
- 73a: Abschlusselement
- 74: Teleskopelement
- 74a: Basiselement
- 75: Teleskopelement
- 75a: Zwischenelement
- 76: Teleskopelement
- 76a: Abschlusselement

- D: Distanz
- Dₘₐₓ: Auszugslänge
- H: Gesamthöhe
- Lₘᵢₙ: Gesamtlänge (kürzeste)
- M: Mittelachse
- S1: Spiel

## Patentansprüche

1. Teleskopführung (1) umfassend ein erstes langgestrecktes Teleskopelement (2) als Basiselement (2a) sowie umfassend ein zweites langgestrecktes Teleskopelement (3) als Abschlusselement (3a), wobei diese beiden Teleskopelemente parallel zueinander angeordnet und in Längsrichtung relativ zueinander bewegbar sind, wobei eine Gleitlagerung mittelbar oder unmittelbar zwischen dem ersten Teleskopelement (2) und dem zweiten Teleskopelement (3) vorgesehen ist, mit der Maßgabe, dass die Gleitlagerung eine Gleitlagereinheit mit wenigstens einem Gleitlagerelement (26, 27, 26', 27') aufweist, welches ortsfest an demjenigen als Basiselement (2a) vorgesehenen Teleskopelement (2) fixierbar ist und mit demjenigen als Abschlusselement (3a) vorgesehenen Teleskopelement (3) gleitend in Kontakt steht, wobei die Teleskopelemente (2, 3, 40) jeweils als Doppelschiene und einstückig ausgebildet sind, wobei die Gleitlagerelemente (26, 27, 26', 27', 37) als hülsenförmige Gleitlagerkörper (51, 61) ausgestaltet sind, die einen C-förmigen Querschnitt (52, 62) aufweisen, und dass mittels des C-förmigen Querschnitt eine seitliche Öffnung (53, 63) am Gleitlagerkörper (51, 61) ausgebildet ist, **dadurch gekennzeichnet, dass** eine weitere Gleitlagereinheit wenigstens ein Gleitlagerelement (37) aufweist, welches ortsfest an dem als Abschlusselement (3a) vorgesehenen Teleskopelement (3) fixierbar ist, während es mit dem als Basiselement (2a) vorgesehenen Teleskopelement (2) gleitend in Kontakt steht, dass jeweils die Doppelschiene zwei parallele Tragschienen (13, 14, 45, 46) und/oder zwei parallele Gleitschienen (15, 16, 43, 44) aufweist, und dass die Teleskopelemente (2, 3, 40) symmetrisch ausgebildet sind, wobei die Symmetrieebene in der Längsrichtung der Teleskopführung sowie orthogonal zur jener Ebene liegt, in der sich die parallelen Tragschienen beziehungsweise Gleitschienen der Doppelschiene erstrecken.

2. Teleskopführung (1) nach Anspruch 1, **dadurch gekennzeichnet, dass** jeder hülsenförmige Gleitlagerkörper (51, 61) eine Innenkontur (54, 64) und eine Außenkontur (55, 65) aufweist, wobei sich die Innenkontur und die Außenkontur (55, 65) in einer axialen Richtung des Gleitlagerkörper (51, 61) erstrecken, und wobei die Innenkontur (54, 64) und die Außenkontur (55, 65) konzentrisch zueinander angeordnet sind, wobei insbesondere die Innenkontur (54,64) des Gleitlagerkörpers (51, 61) einen polygonförmigen Querschnitt aufweist und vorzugsweise der Querschnitt quadratisch ist.

3. Teleskopführung (1) nach Anspruch 2, **dadurch gekennzeichnet, dass** die Außenkontur (55, 65) des Gleitlagerkörpers (51, 61) einen polygonförmigen oder kreisförmigen Querschnitt aufweist.

4. Teleskopführung nach einem der Ansprüche 1 bis 3,
**dadurch gekennzeichnet, dass** zwei Typen Gleitlagerelemente vorgesehen sind, welche unterschiedlich gestaltete Gleitlagerkörper (51, 61) aufweisen, wobei insbesondere der erste Typ Gleitlagerkörper (51) so gestaltet ist, dass dessen Innenkontur (54) als Gleitlagerfläche hergerichtet ist und seine Außenkontur (55) mit einem Fixiermittel (59a, 59b, 59c, 59d) zur ortsfesten Fixierung an einem Teleskopelement (2, 3, 40, 72, 73, 74, 75, 76) ausgebildet ist.

5. Teleskopführung nach Anspruch 4, **dadurch gekennzeichnet, dass** der zweite Typ Gleitlagerkörper (61) so gestaltet ist, dass seine Außenkontur (65) als Gleitlagerfläche hergerichtet ist und seine Innenkontur (64) mit einem Fixiermittel (68a, 68b, 68c, 68d) zur ortsfesten Fixierung an einem Teleskopelement (2, 3, 40, 72, 73, 74, 75, 76) ausgebildet ist.

6. Teleskopführung (1) nach einem der Ansprüche 3 bis 5,
**dadurch gekennzeichnet, dass** die Teleskopelemente (2, 3, 40, 72, 73, 74, 75, 76) mit komplementären Mitteln (60, 69) versehen sind, welche dafür hergerichtet sind mit einem Fixiermittel (59a, 59b, 59c, 59d, 68a, 68b, 68c, 68d) eines Gleitlagerkörpers (51, 61) zusammenzuwirken.

7. Teleskopführung (1) nach einem der Ansprüche 1 bis 6, **dadurch gekennzeichnet, dass** die Öffnung (53, 63) des C-förmigen Querschnitts (52, 62) des Gleitlagerkörpers (51, 61) vorübergehend vergrößerbar ist vermittels elastischer Verformung des Gleitlagerkörpers (51, 61).

8. Teleskopführung (1) nach einem der Ansprüche 1 bis 7, **dadurch gekennzeichnet, dass** das als Basiselement (2a, 72a, 74a) vorgesehene erste langgestreckte Teleskopelement (2, 72, 74) mit einer Tragschiene versehen ist, und dass die Tragschiene (13, 14, 45, 46) entweder einen Querschnitt mit erhabenem Schienenkopf (17, 18) oder einen Querschnitt mit einer Schienenrille (28, 29) aufweist.

9. Teleskopführung (1) nach Anspruch 8, **dadurchgekennzeichnet**, dass das als Abschlusselement (3a, 73a, 76a) vorgesehene zweite langgestreckte Teleskopelement (3, 73, 76) mit einer Gleitschiene (15, 16, 43, 44) versehen ist, und dass die Gleitschiene (15, 16, 43, 44) komplementär zur Tragschiene (13, 14, 45, 46) des ersten langgestreckten Teleskopelements (2, 40) entweder einen Querschnitt mit erhabenem Schienenkopf (17, 18) oder einen Querschnitt mit einer Schienenrille (28, 29) aufweist, wobei insbesondere der Querschnitt des erhabenen Schienenkopfes (17, 18) komplementär zur Innenkontur (54, 64) der Gleitlagerkörper (51, 61) und der Querschnitt der Schienenrille (28, 29) komplementär zur Außenkontur (55, 65) der Gleitlagerkörper (51, 61) gestaltet ist.

10. Teleskopführung (1) nach einem der Ansprüche 8 bis 9, **dadurch gekennzeichnet, dass** an einem Teleskopelement (2, 40), welches eine Tragschiene (13, 14, 45, 46) mit erhabenem Schienenkopf (17, 18) oder eine Gleitschiene mit erhabenem Schienenkopf umfasst, jeweils der erste Typ Gleitlagerkörper (51) applizierbar ist, dessen Außenkontur (55) mit jenem Fixiermittel (59a, 59b, 59c, 59d) versehen ist, das zur ortsfesten Fixierung an dem jeweiligen Teleskopelement (3, 40) dient.

11. Teleskopführung (1) nach einem der Ansprüche 8 bis 10, **dadurch gekennzeichnet, dass** an einem Teleskopelement, welches eine Tragschiene mit einer Schienenrille oder eine Gleitschiene (15, 16, 43, 44) mit einer Schienenrille (28, 29) umfasst, jeweils der zweite Typ Gleitlagerkörper (61) applizierbar ist, dessen Innenkontur (54) mit dem Fixiermittel (59a, 59b, 59c, 59d) versehen ist, das zur ortsfesten Fixierung an dem jeweiligen Teleskopelement (2, 40) dient.

12. Teleskopführung (1) nach einem der Ansprüche 1 bis 11, **dadurch gekennzeichnet, dass** wenigstens ein drittes langgestrecktes Teleskopelement (40) als Zwischenelement (40a) vorgesehen ist.

13. Teleskopführung nach Anspruch 12, **dadurch gekennzeichnet, dass** das Zwischenelement (40a) eine Gleitschiene (43, 44) umfasst, welche mit der Tragschiene (13, 14) des Basiselements (2a) zusammenwirkt sowie seinerseits eine Tragschiene (45, 46) umfasst, welche mit der Gleitschiene (15, 16) des Abschlusselements (3a, 73a, 76a) zusammenwirkt.

14. Teleskopführung (1) nach einem der Ansprüche 1 bis 13, **dadurch gekennzeichnet, dass** für ein als Doppelschiene ausgebildetes Zwischenelement (40a) zwei Doppelschienen übereinander angeordnet sind, wovon eine mit parallelen Gleitschienen (43, 44) ausgestaltet und dem Basiselement (2a) zugewandt ist und die andere mit parallelen Tragschienen (45, 46) ausgestaltet und dem Abschlusselement (3a) zugewandt ist.

15. Teleskopführung nach einem der Ansprüche 1 bis 14, **dadurch gekennzeichnet, dass** das bei einer Doppelschiene jeweils zwischen einer der parallelen Schienen (Tragschiene oder Gleitschiene) und den zugeordneten Gleitlagerkörpern (51, 61) eine seitliche Führung bewirkbar ist, während zwischen den Gleitlagerkörpern der anderen der parallelen Schienen ein seitliches Spiel (S1) vorgesehen ist.

## Claims

1. Telescopic guide (1) comprising a first elongated telescopic element (2) as base element (2a) and comprising a second elongated telescopic element (3) as end element (3a), wherein these two telescopic elements are arranged parallel to each other and are movable relative to each other in the longitudinal direction, wherein a plain bearing is provided indirectly or directly between the first telescopic element (2) and the second telescopic element (3), with the proviso that the plain bearing has a plain bearing unit with at least one plain bearing element (26, 27, 26', 27') which can be fixed stationary to the telescopic element (2) provided as the base element (2a) and is in sliding contact with the telescopic element (3) provided as the end element (3a), wherein the telescopic elements (2,3,40) are each configured as a double rail and in one piece, wherein the plain bearing elements (26, 27, 26', 27', 37) are designed as sleeve-shaped plain bearing bodies (51, 61) which have a C-shaped cross section (52, 62), and in that a lateral opening (53, 63) is formed on the plain bearing body (51, 61) by means of the C-shaped cross section, **characterized in that** a further plain bearing unit comprises at least one plain bearing element which can be fixed in a stationary manner to the telescopic element (3) which is provided as an end element, while it is in sliding contact with the telescopic element (2) which is provided as a base element (2a), **in that** in each case the double rail has two parallel supporting rails (13,14,45, 46) and/or two parallel sliding rails (15, 16, 43, 44), and **in that** the telescopic elements (2, 3, 40) are of symmetrical design, wherein the plane of symmetry lies in the longitudinal direction of the telescopic guide and orthogonally with respect to that plane in which the parallel supporting rails or sliding rails of the double rail extend.

2. Telescopic guide (1) according to claim 1, **characterized in that** each sleeve-shaped plain bearing body (51, 61) has an inner contour (54, 64) and an outer contour (55, 65), wherein the inner contour and the outer contour (55, 65) extend in an axial direction of the plain bearing body (51, 61), and wherein the inner contour (54, 64) and the outer contour (55, 65) are arranged concentric to each other, wherein, in particular, the inner contour (54, 64) of the plain bearing body (51, 61) has a polygonal cross section and the cross section is preferably square.

3. Telescopic guide (1) according to claim 2, **characterized in that** the outer contour (55, 65) of the plain bearing body (51, 61) has a polygonal or circular cross section.

4. Telescopic guide according to one of claims 1 to 3, **characterized in that** two types of plain bearing elements are provided, which have differently designed plain bearing bodies (51, 61), wherein, in particular, the first type of plain bearing body (51) is designed such that its inner contour (54) is set up as a plain bearing surface and its outer contour (55) is formed with a fixing means (59a, 59b, 59c, 59d) for the stationary fixing to a telescopic element (2, 3, 40, 72, 73, 74, 75, 76).

5. Telescopic guide according to claim 4, **characterized in that** the second type of plain bearing body (61) is designed such that its outer contour (65) is set up as a plain bearing surface and its inner contour (64) is formed with a fixing means (68a, 68b, 68c, 68d) for the stationary fixing to a telescopic element (2, 3, 40, 72, 73, 74, 75, 76).

6. Telescopic guide (1) according to one of claims 3 to 5, **characterized in that** the telescopic elements (2, 3, 40, 72, 73, 74, 75, 76) are provided with complementary means (60, 69) which are set up to cooperate with a fixing means (59a, 59b, 59c, 59d, 68a, 68b, 68c, 68d) of a plain bearing body (51, 61).

7. Telescopic guide (1) according to one of claims 1 to 6, **characterized in that** the opening (53, 63) of the C-shaped cross section (52, 62) of the plain bearing body (51, 61) can be temporarily enlarged by means of elastic deformation of the plain bearing body (51, 61).

8. Telescopic guide (1) according to one of claims 1 to 7, **characterized in that** the first elongated telescopic element (2, 72, 74) provided as base element (2a, 72a, 74a) is provided with a supporting rail, and **in that** the supporting rail (13, 14, 45, 46) has either a cross section with a raised rail head (17, 18) or a cross section with a rail channel (28, 29).

9. Telescopic guide (1) according to claim 8, **characterized in that** the second elongated telescopic element (3, 73, 76) provided as end element (3a, 73a, 76a) is provided with a sliding rail (15, 16, 43, 44), and **in that** the sliding rail (15, 16, 43, 44), complementary to the supporting rail (13, 14, 45, 46) of the first elongated telescopic element (2, 40), has either a cross section with a raised rail head (17, 18) or a cross section with a rail channel (28, 29), wherein, in particular, the cross section of the raised rail head (17, 18) is designed complementary to the inner contour (54, 64) of the plain bearing bodies (51, 61) and the cross section of the rail channel (28, 29) is designed complementary to the outer contour (55, 65) of the plain bearing bodies (51, 61).

10. Telescopic guide (1) according to one of claims 8 to 9, **characterized in that** in each case the first type of plain bearing body (51), the outer contour (55) of which is provided with the fixing means (59a, 59b, 59c, 59d) that serves for the stationary fixing to the respective telescopic element (3, 40), can be applied to a telescopic element (2, 40) which comprises a supporting rail (13, 14, 45, 46) with a raised rail head (17, 18) or a sliding rail with a raised rail head.

11. Telescopic guide (1) according to one of claims 8 to 10, **characterized in that** in each case the second type of plain bearing body (61), the inner contour (54) of which is provided with the fixing means (59a, 59b, 59c, 59d) which serves for the stationary fixing to the respective telescopic element (2, 40), can be applied to a telescopic element which comprises a supporting rail with a rail channel or a sliding rail (15, 16, 43, 44) with a rail channel (28, 29).

12. Telescopic guide (1) according to one of claims 1 to 11, **characterized in that** at least one third elongated telescopic element (40) is provided as an intermediate element (40a).

13. Telescopic guide according to claim 12, **characterized in that** the intermediate element (40a) comprises a sliding rail (43, 44) which cooperates with the supporting rail (13, 14) of the base element (2a) and for its part comprises a supporting rail (45, 46) which cooperates with the sliding rail (15, 16) of the end element (3a, 73a, 76a).

14. Telescopic guide (1) according to claims 1 to 13, **characterized in that,** for an intermediate element (40a) formed as a double rail, two double rails are arranged one above the other, of which one is designed with parallel sliding rails (43, 44) and is facing towards the base element (2a) and the other is designed with parallel supporting rails (45, 46) and is facing towards the end element (3a).

15. Telescopic guide according to claims 1 to 14, **characterized in that**, in the case of a double rail, a lateral guiding can be brought about in each case between one of the parallel rails (supporting rail or sliding rail) and the allocated plain bearing bodies (51, 61), whereas a lateral play (S1) is provided between the plain bearing bodies of the other of the parallel rails.

## Revendications

1. Guidage télescopique (1) comprenant un premier élément télescopique allongé (2) en tant qu'élément de base (2a) et un second élément télescopique allongé (3) en tant qu'élément de terminaison (3a), ces deux éléments télescopiques étant disposés parallèlement l'un à l'autre et pouvant être déplacés l'un par rapport à l'autre dans la direction longitudinale, un palier lisse étant prévu directement ou indirectement entre le premier élément télescopique (2) et le deuxième élément télescopique (3), sous réserve que le palier lisse présente une unité de palier lisse avec au moins un élément de palier lisse (26, 27, 26', 27'), lequel peut être fixé de manière stationnaire à l'élément télescopique (2) prévu comme élément de base (2a) et est en contact de glissement avec l'élément télescopique (3) prévu comme élément de terminaison (3a), les éléments télescopiques (2, 3, 40) étant conformés chacun comme rail double et d'un seul tenant, les éléments de palier lisse (26, 27, 26', 27', 37) étant configurés comme corps de palier lisse (51, 61) en forme de douille, qui présentent une section en forme de C (52, 62), et qu'au moyen de la section en forme de C une ouverture latérale (53, 63) soit conformée au niveau du corps de palier lisse (51, 61), **caractérisé en ce qu**'une autre unité de palier lisse présente au moins un élément de palier lisse (37), lequel peut être fixé de manière stationnaire à l'élément télescopique (3) prévu comme élément de terminaison (3a), pendant qu'il est en contact de glissement avec l'élément télescopique (2) prévu comme élément de base (2a), **en ce que** le rail double respectif présente deux rails porteurs parallèles (13, 14, 45, 46) et/ou deux rails de glissement parallèles (15, 16, 43, 44), et **en ce que** les éléments télescopiques (2, 3, 40) sont configurés de manière symétrique, le plan de symétrie étant dans la direction longitudinale du guidage télescopique et orthogonal au plan dans lequel s'étendent les rails porteurs parallèles respectivement les rails de glissement du rail double.

2. Guidage télescopique (1) selon la revendication 1, **caractérisé en ce que** chaque corps de palier lisse en forme de douille (51, 61) présente un contour intérieur (54, 64) et un contour extérieur (55, 65), le contour intérieur et le contour extérieur (55, 65) s'étendant dans une direction axiale du corps de palier lisse (51, 61) et le contour intérieur (54, 64) et le contour extérieur (55, 65) étant disposés concentriquement l'un par rapport à l'autre, le contour intérieur (54,64) du corps de palier lisse (51, 61), notamment, présentant une section de forme polygonale et la section étant préférentiellement carrée.

3. Guidage télescopique (1) selon la revendication 2, **caractérisé en ce que** le contour extérieur (55, 65) du corps de palier lisse (51, 61) présente une section de forme polygonale ou circulaire.

4. Guidage télescopique selon l'une des revendications 1 à 3, **caractérisé en ce que** deux types d'élément de palier lisse sont prévus, lesquels présentent des corps de palier lisse (51, 61) de formes différentes, le premier type de corps de palier lisse (51) étant notamment conformé de sorte que son contour intérieur (54) est conçu comme surface de palier lisse et que son contour extérieur (55) est conformé avec un moyen de fixation (59a, 59b, 59c, 59d) destiné à la fixation stationnaire à un élément télescopique (2, 3, 40, 72, 73, 74, 75, 76).

5. Guidage télescopique selon la revendication 4, **caractérisé en ce que** le deuxième type de corps de palier lisse (61) est conformé de sorte que son contour extérieur (65) est conçu comme surface de palier lisse et que son contour intérieur (64) est conformé avec un moyen de fixation (68a, 68b, 68c, 68d) destiné à la fixation stationnaire à un élément télescopique (2, 3, 40, 72, 73, 74, 75, 76).

6. Guidage télescopique (1) selon l'une des revendications 3 à 5, **caractérisé en ce que** les éléments télescopiques (2, 3, 40, 72, 73, 74, 75, 76) sont munis de moyens complémentaires (60, 69), lesquels sont conformés avec un moyen de fixation (59a, 59b, 59c, 59d, 68a, 68b, 68c, 68d) afin de coopérer avec un corps de palier lisse (51, 61).

7. Guidage télescopique (1) selon l'une des revendications 1 à 6, **caractérisé en ce que** l'ouverture (53, 63) de la section en forme de C (52, 62) du corps de palier lisse (51, 61) peut être agrandie de manière temporaire par déformation élastique du corps de palier lisse (51, 61).

8. Guidage télescopique (1) selon l'une des revendications 1 à 7, **caractérisé en ce que** le premier élément télescopique allongé (2, 72, 74) prévu comme élément de base (2a, 72a, 74a) est muni d'un rail porteur et **en ce que** le rail porteur (13, 14, 45, 46) présente soit une section avec champignon saillant (17, 18) soit une section avec une gorge de rail (28, 29).

9. Guidage télescopique (1) selon la revendication 8,
**caractérisé en ce que** le deuxième élément télescopique allongé (3, 73, 76) prévu comme élément de terminaison (3a, 73a, 76a) est muni d'un rail de glissement (15, 16, 43, 44) et **en ce que** le rail de glissement (15, 16, 43, 44) présente, complémentairement au rail porteur (13, 14, 45, 46) du premier élément télescopique allongé (2, 40), soit une section à champignon saillant (17, 18) soit une section à gorge de rail (28, 29), la section du champignon saillant (17, 18) notamment étant conçue complémentairement au contour intérieur (54, 64) des corps de palier lisse (51, 61) et la section de la gorge de rail (28, 29) notamment étant conçue complémentairement au contour extérieur (55, 65) des corps de palier lisse (51, 61).

10. Guidage télescopique (1) selon l'une des revendications 8 à 9, **caractérisé en ce que** peut être appliqué au niveau d'un élément télescopique (2, 40) comprenant un rail porteur (13, 14, 45, 46) à champignon saillant (17, 18) ou un rail de glissement à champignon saillant le premier type de corps de palier lisse (51) respectif, dont le contour extérieur (55) est muni du moyen de fixation (59a, 59b, 59c, 59d) qui sert à la fixation stationnaire à l'élément télescopique respectif (3, 40).

11. Guidage télescopique (1) selon l'une des revendications 8 à 10, **caractérisé en ce que** peut être appliqué au niveau d'un élément télescopique comprenant un rail porteur à gorge de rail ou un rail de glissement (15, 16, 43, 44) à gorge de rail (28, 29) le deuxième type de corps de palier lisse (61) respectif, dont le contour intérieur (54) est muni du moyen de fixation (59a, 59b, 59c, 59d) qui sert à la fixation stationnaire à l'élément télescopique respectif (2, 40).

12. Guidage télescopique (1) selon l'une des revendications 1 à 11, **caractérisé** e n c e qu'au moins un troisième élément télescopique allongé (40) est prévu comme élément intermédiaire (40a).

13. Guidage télescopique selon la revendication 12, **caractérisé en c e que** l'élément intermédiaire (40a) comprend un rail de glissement (43, 44), lequel coopère avec le rail porteur (13, 14) de l'élément de base (2a) et comprend de son côté un rail porteur (45, 46), lequel coopère avec le rail de glissement (15, 16) de l'élément de terminaison (3a, 73a, 76a).

14. Guidage télescopique (1) selon l'une des revendications 1 à 13, **caractérisé en ce que** pour un élément intermédiaire (40a) conformé comme rail double, deux rails doubles sont disposés l'un au-dessus de l'autre, l'un étant conçu avec des rails de glissement (43, 44) parallèles et tourné vers l'élément de base (2a) et l'autre étant conçu avec des rails porteurs (45, 46) parallèles et tourné vers l'élément de terminaison (3a).

15. Guidage télescopique selon l'une des revendications 1 à 14, **caractérisé en ce que** dans le cas d'un rail double, un guidage latéral peut être réalisé respectivement entre l'un des rails parallèles (rail porteur ou rail de glissement) et les corps de palier lisse affectés (51, 61), un guidage latéral peut être réalisé, tandis qu'un jeu latéral (S1) est prévu entre les corps de palier lisse de l'autre rail parallèle.
